(19) **Europäisches Patentamt**
**European Patent Office**
**Office européen des brevets**

(11) **EP 3 932 987 A1**

(12) **EUROPEAN PATENT APPLICATION**
published in accordance with Art. 153(4) EPC

(43) Date of publication:
**05.01.2022 Bulletin 2022/01**

(51) Int Cl.:
**C08L 25/06** (2006.01)     **C08L 77/00** (2006.01)
**C08L 81/02** (2006.01)     **C08L 101/00** (2006.01)
**C08K 3/013** (2018.01)     **C08K 3/34** (2006.01)
**C08K 3/36** (2006.01)     **C08K 3/40** (2006.01)

(21) Application number: **20763066.6**

(22) Date of filing: **21.02.2020**

(86) International application number:
**PCT/JP2020/007174**

(87) International publication number:
**WO 2020/175389 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2019 JP 2019032001**

(71) Applicant: **Kuraray Co., Ltd.**
**Kurashiki-shi, Okayama 710-0801 (JP)**

(72) Inventors:
• **SUGAI, Naoto**
**Tsukuba-shi, Ibaraki 305-0841 (JP)**
• **SHIGEMATSU, Takaharu**
**Tsukuba-shi, Ibaraki 305-0841 (JP)**
• **ITO, Yuki**
**Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **WATERPROOF COMPONENT, ELECTRONIC EQUIPMENT COMPRISING SAME, WATERPROOFING METHOD USING INSERT-MOLDED BODY, AND WATERPROOFING METHOD FOR ELECTRONIC EQUIPMENT**

(57) The present invention relates to a waterproof component that is an insert molded body formed from a thermoplastic resin composition and a metal component, wherein
the thermoplastic resin composition contains a thermoplastic resin (A) and an inorganic filler (B);
the content of the inorganic filler (B) is 8 to 130 parts by mass based on 100 parts by mass of the thermoplastic resin (A);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less.
The present invention also relates to an electronic device provided with the same.

EP 3 932 987 A1

**Description**

Technical Field

The present invention relates to a waterproof component and an electronic device provided with the same, a waterproofing method using an insert molded body, and a method for waterproofing an electronic device, etc.

Background Art

In recent years, electronic devices, such as smartphones, have been frequently required to have waterproofness. An external connection terminal of such an electronic device is typically a composite of a resin or a resin composition and a metal component. In many cases, the metal component is exposed to the outside, and the waterproofness on a joint surface between the resin or resin composition and the metal is a problem. At the same time, as for a method for producing a printed circuit board having an electronic component joined thereto, the usage of surface mounting in which a lead-free solder paste is printed on a printed circuit board, and an electronic component is then mounted thereon, followed by heating in a reflow furnace at about 260°C at which the lead-free solder is melted is expanding. According to the surface mounting, downsizing or improvement in productivity of the printed circuit board can be achieved; however, in the mounted component, in the reflow process and the sequent cooling process, a stress is generated according to a difference in the expansion and shrinkage characteristics between the metal component and the resin or resin composition, and a minute gap is liable to be generated between the metal component and the resin or resin composition, so that it is difficult to maintain the waterproofness.

For that reason, as a waterproofing method in such an external connection terminal, a method of using a sealing material, such as an elastic body, has hitherto been known (see PTL 1, etc.). However, there were involved problems in, for example, a point that the component cannot be completed through a single process because of installation of the elastic body; a point that it is difficult to achieve downsizing; and a point that costs are generated for the elastic body itself or a process of installing it.

Then, there is proposed a production method of a waterproof component through insert molding by subjecting a metal component having been inserted into a die to injection molding with a resin or a resin composition, thereby undergoing integral joining (see PTLs 2, 3, and 4, etc.).

For example, PTL 2 discloses a polyamide resin composition containing a specified branched compound, a filler, an impact-resistant improving material, and so on and a resin metal composite composed of the foregoing resin composition. In addition, PTL 3 discloses a resin composition containing a polyamide resin having a melting point of 140°C or higher and lower than 210°C and a flaky filler or a fibrous filler and a resin composition for insert molding composed of the foregoing resin composition.

In addition, PTL 4 discloses a resin composition composed of a thermoplastic resin, such as an aromatic polyamide resin, a liquid crystal polymer resin, and a styrenic polymer having a mainly syndiotactic structure, an ethylene-based copolymer or a polyamide 46, and an inorganic filler; and a package for accommodating a semiconductor device composed of the foregoing resin composition.

Citation List

Patent Literature

PTL 1:JP 2002-33155 A
PTL 2: JP 2014-141630 A
PTL 3: JP 2003-321606 A
PTL 4: JP 2002-105333 A

Summary of Invention

Technical Problem

However, the resins which are used for the resin compositions of PTLs 2 and 3 are low in heat resistance, so that when applied for surface mounting, there was occasionally caused deformation or melting in the reflow process. In addition, in these PTLs 2 and 3, the reflow process passability is not suggested at all.

In addition, in PTL 4, the ethylene-based copolymer occasionally lowers the heat resistance and mechanical strength of the molded article or increases a burr. In addition, as for molded articles containing the polyamide 46, since the coefficient of water absorption increases, there was occasionally caused failure of connection or quality due to a dimensional change or generation of blister at the time of surface mounting process, a problem remained in making both the reflow process passability and the waterproofness compatible with each other on the surface mounting.

That is, a problem of the present invention is to provide a waterproof component that is an insert molded body, which has sufficient waterproofness even after a heating process, such as a reflow process, and an electronic device provided with the same.

Solution to Problem

As a result of extensive and intensive investigations, the present inventors have found that in a waterproof component that is an insert molded body formed from a thermoplastic resin composition and a metal component, the waterproofness after a reflow process is improved by adding a specified amount of a specified spherical inorganic filler or tabular inorganic filler to a thermoplastic resin to be used, and further made investigations on the basis of such finding, thereby leading to accomplishment of the present invention.

The present invention relates to the following [1] to [16].

[1] A waterproof component that is an insert molded body formed from a thermoplastic resin composition and a metal component, wherein

the thermoplastic resin composition contains a thermoplastic resin (A) and an inorganic filler (B);
the content of the inorganic filler (B) is 8 to 130 parts by mass based on 100 parts by mass of the thermoplastic resin (A);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less.

[2] The waterproof component as set forth in [1], wherein the thermoplastic resin (A) has a melting point of 280°C or higher.
[3] The waterproof component as set forth in [1] or [2], wherein the thermoplastic resin (A) is at least one selected from the group consisting of a polyamide, a liquid crystal polymer, a polyphenylene sulfide, and a styrenic polymer having a mainly syndiotactic structure.
[4] The waterproof component as set forth in any of [1] to [3], wherein the thermoplastic resin (A) is a polyamide in which 50 to 100 mol% of a diamine unit thereof is an aliphatic diamine unit having 4 to 18 carbon atoms.
[5] The waterproof component as set forth in any of [1] to [4], wherein the inorganic filler (B) is at least one selected from the group consisting of glass beads, spherical silica, mica, glass flake, and kaolin.
[6] The waterproof component as set forth in [5], wherein the inorganic filler (B) is at least one selected from the group consisting of glass beads and spherical silica.
[7] The waterproof component as set forth in any of [1] to [6], which is used for an application to be applied in a surface mounting process.
[8] The waterproof component as set forth in any of [1] to [7], which is an external connection terminal.
[9] The waterproof component as set forth in any of [1] to [8], which is a switch.
[10] An electronic device provided with the waterproof component as set forth in any of [1] to [9].
[11] The electronic device as set forth in [10], which is a portable electronic device.
[12] A waterproofing method using an insert molded body formed from a thermoplastic resin composition and a metal component, the method including using a thermoplastic resin composition, wherein

the thermoplastic resin composition contains a thermoplastic resin (A) and an inorganic filler (B);
the content of the inorganic filler (B) is 8 to 130 parts by mass based on 100 parts by mass of the thermoplastic resin (A);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less.

[13] Use for waterproofing an insert molded body formed from a thermoplastic resin composition and a metal component, wherein

the thermoplastic resin composition contains a thermoplastic resin (A) and an inorganic filler (B);
the content of the inorganic filler (B) is 8 to 130 parts by mass based on 100 parts by mass of the thermoplastic resin (A);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less.

[14] A method for waterproofing an electronic device, including using the waterproof component as set forth in any of [1] to [7] as an external connection terminal.
[15] A method for waterproofing an electronic device, including using the waterproof component as set forth in any of [1] to [7] as a switch.
[16] A method for producing a waterproof component, including subjecting a thermoplastic resin composition and a metal component to insert molding, wherein

the thermoplastic resin composition contains a thermoplastic resin (A) and an inorganic filler (B);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less,
the thermoplastic resin composition being obtained through melt kneading of the inorganic filler (B) in the content of 8 to 130 parts by mass based on 100 parts by mass of the thermoplastic resin (A).

Advantageous Effects of Invention

In accordance with the present invention, it is possible to provide a waterproof component that is an insert molded body, which has sufficient waterproofness even after a heating process, such as a reflow process, and an electronic device provided with the same.

Brief Description of Drawings

Fig. 1 is a photograph of a sample used for a red ink test in a working example.
Fig. 2 is a schematic view of an X-X' line cross-sectional view for explaining the red ink test in the working examples.
Fig. 3 is a photograph showing a sample for explaining a judgement of the red ink test in the working examples.

Description of Embodiments

The present invention is hereunder described in detail.
The waterproof component of the present invention is a waterproof component that is an insert molded body formed from a thermoplastic resin composition and a metal component, wherein

the thermoplastic resin composition contains a thermoplastic resin (A) and an inorganic filler (B);
the content of the inorganic filler (B) is 8 to 130 parts by mass based on 100 parts by mass of the thermoplastic resin (A);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less and the tabular inorganic filler (B2) has an average particle diameter of 2 $\mu$m or more and 200 $\mu$m or less and has an average aspect ratio of 10 or more and 200 or less.

By using the aforementioned thermoplastic resin composition, the waterproofness of the insert molded body formed from the thermoplastic resin composition and the metal component (on a joint surface between the thermoplastic resin composition and the metal) is improved, and the waterproofness of the waterproof component becomes sufficient.
Although the reason for this is not always elucidated yet, it may be considered that by using the aforementioned thermoplastic resin composition, a stress of the resin composition, which remains after the insert molding process or heating process, is relaxed, whereby the generation of a gap on the joint surface between the thermoplastic resin composition and the metal can be prevented.
In addition, by specifying the shape of the inorganic filler to a spherical shape and a tabular shape and satisfying the aforementioned requirements regarding the average particle diameter and the aspect ratio, the inorganic filler hardly generates anisotropy in the reflow process and expands and shrinks almost uniformly, whereby the generation of a gap on the joint surface between the thermoplastic resin composition and the metal can be prevented. Supposing that the shape of the inorganic filler is, for example, a rod shape, it may be considered that anisotropy is liable to be generated due to the heating treatment, and a gap on the joint surface between the thermoplastic resin composition and the metal is generated, so that the desired waterproofness is not obtained.

(Thermoplastic Resin (A))

The thermoplastic resin (A) which is used in the present invention is not particularly limited so long as it is able to give the aforementioned effects. Examples thereof include a polycarbonate; a polyphenylene oxide; a polyphenylene sulfide (PPS); a polysulfone; a polyether sulfone; a polyarylate; a cyclic polyolefin; a polyether imide; a polyamide; a polyamide-imide; a polyimide; a liquid crystal polymer, such as an aromatic polyester and an aromatic polyester amide; a polyaminobismaleimide; a polyetheretherketone: and a polystyrene.

Above all, from the viewpoint of dimensional stability and heat resistance, at least one selected from the group consisting of a polyamide, a liquid crystal polymer, PPS, and a styrenic polymer having a mainly syndiotactic structure is preferred, a liquid crystal polymer and a polyamide are more preferred, and a polyamide is still more preferred.

The melting point of the thermoplastic resin (A) is preferably 280°C or higher, more preferably 285°C or higher, and still more preferably 295°C or higher. So long as the melting point of the thermoplastic resin (A) is the aforementioned temperature or higher, even when the waterproof component containing the thermoplastic resin (A) is used for an application to be exposed to a heating process, such as a reflow process, the sufficient waterproofness can be maintained.

(Polyamide)

The polyamide is preferably one having a dicarboxylic acid unit and a diamine unit.

Examples of the dicarboxylic acid unit include structural units derived from aliphatic dicarboxylic acids, such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid; alicyclic dicarboxylic acids, such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; aromatic dicarboxylic acids, such as terephthalic acid, isophthalic acid, 1,4-naphthalenedicarboxylic acid, 2,6-naphthalenedicarboxylic acid, 2,7-naphthalenedicarboxylic acid, diphenic acid, 4,4'-biphenyldicarboxylic acid, diphenylmethane-4,4'-dicarboxylic acid, and diphenylsulfone-4,4'-dicarboxylic acid. These units may be either one kind or two or more kinds.

The polyamide can also contain a structural unit derived from a trivalent or higher-valent carboxylic acid, such as trimellitic acid, trimesic acid, and pyromellitic acid, within a range where it is possible to perform melt molding, within a range where the effects of the present invention are not impaired.

The polyamide is preferably one in which 50 to 100 mol% of the diamine unit is an aliphatic diamine unit having 4 to 18 carbon atoms, more preferably one in which 60 to 100 mol% of the diamine unit is an aliphatic diamine unit having 4 to 18 carbon atoms, and still more preferably one in which 90 to 100 mol% of the diamine unit is an aliphatic diamine unit having 4 to 18 carbon atoms.

Examples of the aliphatic diamine unit having 4 to 18 carbon atoms include structural units derived from linear aliphatic diamines, such as 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,4-tetradecanediamine, 1,15-pentadecanediamine, 1,16-hexadecanediamine, 1,17-heptadecanediamine, and 1,18-octadecanediamine; branched aliphatic diamines, such as 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, and 5-methyl-1,9-nonanediamine. These units may be either one kind or two or more kinds.

Above all, the aliphatic diamine unit is preferably a structural unit derived from at least one selected from the group consisting of 1,4-butanediamine, 1,6-hexanediamine, 2-methyl-1,5-pentanediamine, 1,8-octanediamine, 2-methyl-1,8-octanediamine, 1,9-nonanediamine, 1,10-decanediamine, 1,11-undecanediamine, and 1,12-dodecanediamine;

and more preferably a structural unit derived from at least one selected from the group consisting of 1,4-butanediamine, 1,6-hexanediamine, 1,9-nonanediamine, 2-methyl-1,8-octanediamine, and 1,10-decanediamine.

In the case where the diamine unit contains both a structural unit derived from 1,9-nonanediamine and a structural unit derived from 2-methyl-1,8-octanediamine, a molar ratio of the structural unit derived from 1,9-nonanediamine and the structural unit derived from 2-methyl-1,8-octanediamine is preferably in a range of 95/5 to 40/60, and more preferably in a range of 90/10 to 50/50 in terms of a [(structural unit derived from 1,9-nonanediamine)/(structural unit derived from 2-methyl-1,8-octanediamine)] ratio.

Depending upon the application, there may be a case where it is preferred that the [(structural unit derived from 1,9-nonanediamine)/(structural unit derived from 2-methyl-1,8-octanediamine)] ratio is in a range of 55/45 to 45/55.

The diamine unit in the polyamide can contain a diamine unit other than the aliphatic diamine unit having 4 to 18 carbon atoms within a range where the effects of the present invention are not impaired. Examples of such a diamine unit include structural units derived from aliphatic diamines, such as ethylenediamine, 1,2-propanediamine, and 1,3-propanediamine; alicyclic diamines, such as cyclohexanediamine, methylcyclohexanediamine, isophoronediamine, norbornene dimethylamine, and tricyclodecane dimethylamine; aromatic diamines, such as p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenyl ether. These units may be either one kind or two or more kinds.

The polyamide may contain an aminocarboxylic acid unit. Examples of the aminocarboxylic acid unit include units derived from lactams, such as caprolactam and lauryl lactam; aminocarboxylic acids, such as 11-aminoundecanoic acid and 12-aminododecanoic acid. The content of the aminocarboxylic acid unit in the polyamide is preferably 40 mol% or less, and more preferably 20 mol% or less based on 100 mol% of a sum total of the dicarboxylic acid unit and the diamine unit of the polyamide.

The polyamide may contain an end capping agent-derived unit. The content of the end capping agent-derived unit is preferably 1.0 to 10 mol%, more preferably 2.0 to 7.5 mol%, and still more preferably 2.5 to 6.5 mol% relative to the diamine unit.

In order to allow the end capping agent-derived unit to fall within the aforementioned desired range, such can be performed by charging the end capping agent in the diamine during charging of polymerization raw materials such that the content of the end capping agent-derived unit falls within the aforementioned desired range. Taking into consideration the fact that the monomer components volatilize during the polymerization, it is desired to make fine adjustments to the charge amount of the end capping agent during charging of polymerization raw materials such that the desired amount of the end capping agent-derived unit is introduced into the resulting resin.

Examples of a method of determining the content of the end capping agent-derived unit in the polyamide include a method in which a solution viscosity is measured, the whole end group amount is calculated according to a relational expression thereof to a number average molecular weight, and the amino group amount and the carboxy group amount as determined through titration are subtracted therefrom, as described in JP 07-228690 A; and a method in which $^1$H-NMR is used, and the content of the end capping agent-derived unit in the polyamide is determined on the basis of integrated values of signals corresponding to the diamine unit and the end capping agent-derived unit, respectively.

As the end capping agent, a monofunctional compound having reactivity with the terminal amino group or the terminal carboxy group can be used. Specifically, examples thereof include a monocarboxylic acid, an acid anhydride, a monoisocyanate, a monoacid halide, a monoester, a monoalcohol, and a monoamine. From the viewpoint of reactivity and stability of the endcap, etc., a monocarboxylic acid is preferred as the end capping agent relative to the terminal amino group, and a monoamine is preferred as the end capping agent relative to the terminal carboxy group. In addition, from the viewpoint of easiness of handling, etc., a monocarboxylic acid is more preferred as the end capping agent.

The monocarboxylic acid which is used as the end capping agent is not particularly limited so long as it has reactivity with the amino group. Examples thereof include aliphatic monocarboxylic acids, such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids, such as cyclopentane carboxylic acid and cyclohexane carboxylic acid; aromatic monocarboxylic acids, such as benzoic acid, toluic acid, $\alpha$-naphthalenecarboxylic acid, $\beta$-naphthalenecarboxylic acid, methylnaphthalenecarboxylic acid, and phenylacetic acid; and arbitrary mixtures thereof. Of these, from the standpoint of reactivity, stability of endcap, and price, etc., at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferred.

The monoamine which is used as the end capping agent is not particularly limited so long as it has reactivity with the carboxy group. Examples thereof include aliphatic monoamines, such as methylamine, ethylamine, propylamine, butylamine, hexylamine, octylamine, decylamine, stearylamine, dimethylamine, diethylamine, dipropylamine, and dibutylamine; alicyclic monoamines, such as cyclohexylamine and dicyclohexylamine; aromatic monoamines, such as aniline, toluidine, diphenylamine, and naphthylamine; and arbitrary mixtures thereof. Of these, from the standpoint of reactivity, high boiling point, stability of endcap, and price, etc., at least one selected from the group consisting of butylamine, hexylamine, octylamine, decylamine, stearylamine, cyclohexylamine, and aniline is preferred.

The polyamide can be produced by adopting an arbitrary method known as the method for producing a polyamide. For example, the polyamide can be produced by a method, such as a solution polymerization method or an interfacial polymerization method using an acid chloride and a diamine as raw materials; and a melt polymerization method, a solid phase polymerization method, and a melt extrusion polymerization method each using a dicarboxylic acid and a diamine as raw materials.

The polyamide can be, for example, produced by first collectively adding a diamine and a dicarboxylic acid, and optionally a catalyst or an end capping agent, to produce a nylon salt, and then thermally polymerizing the nylon salt at a temperature of 200 to 250°C to prepare a prepolymer, followed by performing solid phase polymerization, or performing polymerization by using a melt extruder. In the case where the final stage of the polymerization is performed through solid phase polymerization, it is preferred to perform the polymerization under reduced pressure or under an inert gas flow. So long as the polymerization temperature falls within a range of 200 to 280°C, a polymerization rate is large, productivity is excellent, and coloration or gelation can be effectively suppressed. The polymerization temperature in the case of performing the final stage of the polymerization by using a melt extruder is preferably 370°C or lower, and when the polymerization is performed under such a condition, a polyamide which is substantially free from decomposition and less in deterioration is obtained.

Examples of the catalyst which can be used during producing the polyamide include phosphoric acid, phosphorous acid, hypophosphorous acid, and a salt or an ester thereof. Examples of the salt or ester include a salt of phosphoric acid, phosphorous acid, or hypophosphorous acid with a metal, such as potassium, sodium, magnesium, vanadium, calcium, zinc, cobalt, manganese, tin, tungsten, germanium, titanium, and antimony; an ammonium salt of phosphoric acid, phosphorous acid, or hypophosphorous acid; an ethyl ester, an isopropyl ester, a butyl ester, a hexyl ester, an isodecyl ester, an octadecyl ester, a decyl ester, a stearyl ester, a phenyl ester of phosphoric acid, phosphorous acid, or hypophosphorous acid.

The polyamide may be any of a crystalline polyamide, an amorphous polyamide, and a mixture thereof.

Examples of the crystalline polyamide include polycaproamide (polyamide 6), polyhexamethylene adipamide (polyamide 66), polytetramethylene adipamide (polyamide 46), polyhexamethylene sebacamide (polyamide 610), polyhexamethylene dodecanamide (polyamide 612), polyundecamethylene adipamide (polyamide 116), poly-bis(4-aminocyclohexyl)methane dodecanamide (polyamide PACM 12), poly-bis(3-methyl-4-aminocyclohexyl)methane dodecanamide (polyamide dimethyl PACM 12), polyundecamethylene terephthalamide (polyamide 11T), polyundecamethylene hexahydroterephthalamide (polyamide 11T(H)), polyundecanamide (polyamide 11), polydodecanamide (polyamide 12), polytrimethyl hexamethylene terephthalamide (polyamide TMDT), polymetaxylylene adipamide (polyamide MXD 6), polyhexamethylene terephthalamide (polyamide 6T), polynonamethylene terephthalamide (polyamide 9T), polydecamethylene terephthalamide (polyamide 10T), polyhexamethylene isophthalamide (polyamide 6I), a copolymer of polyamide 6I and polyamide 6T (polyamide 6I/6T), and a copolymer of polyamide 6T and polyundecanamide (polyamide 11) (polyamide 6T/11), and copolymerization products or mixtures thereof. Ones in which a benzene ring of terephthalic acid and/or isophthalic acid is substituted with an alkyl group or a halogen atom are also included in the crystalline polyamide.

Of the aforementioned crystalline polyamides, polyamide 6, polyamide 66, polyamide 11, polyamide 12, polyamide 46, polyamide 6T, polyamide 9T, and polyamide 10T are preferred; polyamide 6, polyamide 66, polyamide 46, polyamide 6T, polyamide 9T, and polyamide 10T are more preferred; and polyamide 46, polyamide 6T, polyamide 9T, and polyamide 10T are still more preferred. The aforementioned crystalline polyamides may be used alone, or plural kinds thereof may be used in combination.

Examples of the amorphous polyamide include a polycondensate of terephthalic acid/isophthalic acid/1,6-hexanediamine, a polycondensate of terephthalic acid/isophthalic acid/1,6-hexanediamine/bis(3-methyl-4-aminocyclohexyl)methane, a polycondensate of terephthalic acid/2,2,4-trimethyl-1,6-hexanediamine/2,4,4-trimethyl-1,6-hexanediamine, a polycondensate of isophthalic acid/bis(3-methyl-4-aminocyclohexyl)methane/ω-laurolactam, a polycondensate of isophthalic acid/2,2,4-trimethyl-1,6-hexanediamine/2,4,4-trimethyl-1,6-hexanediamine, and a polycondensate of terephthalic acid/isophthalic acid/2,2,4-trimethyl-1,6-hexanediamine/2,4,4-trimethyl-1,6-hexanediamine. Ones in which a benzene ring of terephthalic acid and/or isophthalic acid is substituted with an alkyl group or a halogen atom are also included in the amorphous polyamide.

Of the aforementioned amorphous polyamides, a polycondensate of terephthalic acid/isophthalic acid/1,6-hexanediamine, a polycondensate of terephthalic acid/isophthalic acid/1,6-hexanediamine/bis(3-methyl-4-aminocyclohexyl)methane, and a polycondensate of terephthalic acid/2,2,4-trimethyl-1,6-hexanediamine/2,4,4-trimethyl-1,6-hexanediamine are preferred; and a polycondensate of terephthalic acid/isophthalic acid/1,6-hexanediamine and a polycondensate of terephthalic acid/isophthalic acid/1,6-hexanediaminetbis(3-methyl-4-aminocyclohexyl)methane are more preferred. The aforementioned amorphous polyamides may be used alone, or plural kinds thereof may be used in combination.

(Inorganic Filler (B))

The inorganic filler (B) is at least either one of a spherical inorganic filler (B1) and a tabular inorganic filler (B2).

Examples of the spherical inorganic filler (B1) which is used in the present invention include glass beads, spherical silica, glass balloon, shirasu balloon, titanium oxide, carbon black, and mica, all of which are spherical. These may be used alone, or 2 or more kinds thereof may be used in combination.

Examples of the tabular inorganic filler (B2) include mica, glass flake, kaolin, talc, and stratiform silicate, all of which are tabular. These may be used alone, or 2 or more kinds thereof may be used in combination.

Among the aforementioned inorganic fillers (B), at least one selected from the group consisting of glass beads, spherical silica, mica, glass flake, and kaolin, all of which are spherical or tabular, is preferred, at least one selected from the group consisting of glass beads, spherical silica, glass flake, and mica is more preferred, and at least one selected from the group consisting of glass beads and mica is still more preferred.

The spherical inorganic filler (B1) which is used in the present invention has an average particle diameter of 2 $\mu$m or more and 200 $\mu$m or less, preferably 2 $\mu$m or more and 80 $\mu$m or less, and more preferably 5 $\mu$m or more and 50 $\mu$m or less. In addition, from the viewpoint of moldability, surface properties, and mechanical characteristics, the average particle diameter is preferably 200 $\mu$m or less, more preferably 80 $\mu$m or less, and still more preferably 50 $\mu$m or less.

In the case of the tabular inorganic filler (B2), an average particle diameter thereof is 2 $\mu$m or more and 200 $\mu$m or less, preferably 2 $\mu$m or more and 80 $\mu$m or less, and more preferably 5 $\mu$m or more and 50 $\mu$m or less. In addition, from the viewpoint of moldability, surface properties, and mechanical characteristics, the average particle diameter is preferably 200 $\mu$m or less, more preferably 80 $\mu$m or less, and still more preferably 50 $\mu$m or less. In addition, an average aspect ratio of the tabular inorganic filler (B2) is 10 or more and 200 or less, preferably 10 or more and 100 or less, and more preferably 10 or more and 50 or less. In addition, from the viewpoint of moldability, surface properties, and mechanical characteristics, the aspect ratio is 10 or more and 200 or less, preferably 10 or more and 100 or less, and more preferably 10 or more and 50 or less.

In this specification, the "average particle diameter" of the spherical inorganic filler (B1) refers to a volume average particle diameter. The average particle diameter can be calculated by filling an electrolytic solution in pores having a pore diameter of 20 to 400 $\mu$m and determining the volume from a change in conductivity of the electrolytic solution on the occasion when the particles pass through the electrolytic solution. Specifically, the volume average particle diameter of the spherical inorganic filler (B1) is a volume average particle diameter (arithmetic average diameter in the particle size distribution on the volume basis) measured with a Coulter precise particle size distribution analyzer "MULTISIZER III" (manufactured by Beckman Coulter, Inc.). On the occasion of measurement, in accordance with "REFERENCE MANUAL FOR THE COULTER MULTISIZER (1987)", published by Coulter Electronics Limited, calibration of the "MULTISIZER III" is performed using an aperture adapted to the particle diameter of particles to be measured, to undergo the measurement.

Specifically, 0.1 g of the spherical inorganic filler (B1) is dispersed in 10 mL of a 0.1% by weight nonionic surfactant solution by using a touch mixer and ultrasonic waves, to prepare a dispersion. The dispersion is added dropwise with a dropper into a beaker filled with an electrolytic solution for measurement "ISOTON (registered trademark) II" (manufactured by Beckman Coulter, Inc.) as attached to a main body of the "MULTISIZER III" while gently stirring, thereby adjusting a reading of a densitometer shown on a display of the main body of the "MULTISIZER III" to around 10%. Next, in accordance with "REFERENCE MANUAL FOR THE COULTER MULTISIZER (1987)", published by Coulter Electronics Limited, the Aperture Size (diameter), the Current (aperture current), the Gain, and the Polarity (polarity of the inside electrode) are input to measure the particle size distribution on the volume basis in a manual mode. During the measurement, the contents in the beaker are gently stirred to such a degree that bubbles are not contained, and the measurement is completed at the point of time of measuring 100,000 particles of the spherical inorganic filler (B1). The volume average particle diameter of the spherical inorganic filler (B1) is an average value of the particle diameter of the measured 100,000 particles of the spherical inorganic filler (B1) and means an arithmetic average diameter in the particle size distribution on the volume basis.

In this specification, the "average particle diameter" of the tabular inorganic filler (B2) refers to a particle diameter at a cumulative mass of 50%. The average particle diameter can be determined by dispersing the tabular inorganic filler (B2) in pure water and measuring the dispersion with a particle diameter distribution measuring apparatus ("Microtrac MT3000", manufactured by Microtrac Bel Corp., or the like) by the laser diffraction/scattering method.

In this specification, the "average aspect ratio" of the tabular filler (B2) is a value obtained by dividing the average particle diameter by an "average thickness", and it is possible to measure the average thickness by the water surface particle film method as mentioned below. The tabular inorganic filler (B2) is dipped in a 2% stearylamine toluene solution, and after disposing of a supernatant, the residue is subjected to suction filtration and washed with acetone, followed by air-drying. The surface of water of a water tank charged with a fixed amount of water is divided into three by two partition plates which do not reach the bottom of the water tank, and the tabular inorganic filler (B2) obtained through filtration is sprayed onto the surface of water in the center surrounded by the two partition plates while circulating water by a water jet pump. The sprayed mica is subjected to free movement on the surface of water owing to a water flow and uniformly dispersed. For dispersion assistance, an antistatic spray is used, as the need arises. At the point of time when the tabular inorganic filler (B2) has been uniformly dispersed, the pump is switched off, one of the partition plates is moved towards the other partition plate, to prepare a uniform film of the tabular inorganic filler (B2). The endpoint of the movement is made right before the generation of wrinkles in the film.

The average thickness is calculated according to the following equation:

$$t = W/(1 - \varepsilon)\rho A$$

A: film area; t: average thickness; W: weight of the tabular inorganic filler (B2); p: density of the tabular inorganic filler (B2); and (1 - $\varepsilon$): particle filling rate (= 0.9).

The content of the inorganic filler (B) in the thermoplastic resin composition is 8 to 130 parts by mass, preferably 20 to 130 parts by mass, more preferably 30 to 130 parts by mass, still more preferably 40 to 130 parts by mass, and yet still more preferably 45 to 110 parts by mass based on 100 parts by mass of the thermoplastic resin (A).

When the content of the inorganic filler (B) is less than 8 parts by mass, a sufficient waterproofing effect to be brought due to the fact that the inorganic filler (B) is contained is not obtained. In addition, when the content of the inorganic filler (B) is more than 130 parts by mass, melt kneading properties become poor.

In the case where the thermoplastic resin composition contains both the spherical inorganic filler (B1) and the tabular inorganic filler (B2), the content of the inorganic filler (B) means the total content of the spherical inorganic filler (B1) and the tabular inorganic filler (B2).

(Other Components)

The thermoplastic resin composition which is used in the present invention may further contain other components than the thermoplastic resin (A) and the inorganic filler (B), such as a release agent, an antioxidant, a heat stabilizer, a photostabilizer, a styrene-maleic anhydride copolymer (SMA), a lubricant, a nucleating agent, a crystallization retarder, a hydrolysis inhibitor, an antistatic agent, a radical inhibitor, a matting agent, a UV absorber, a flame retardant, a drip-preventing agent, a sliding property-imparting agent, and other inorganic materials than the inorganic filler (B), within a rage where the effects of the present invention are not impaired.

Examples of the inorganic material include carbon nanotube, fullerene, talc, wollastonite, zeolite, sericite, kaolin, clay, pyrophyllite, silica, bentonite, alumina silicate, silicon oxide, magnesium oxide, alumina, zirconium oxide, iron oxide, calcium carbonate, magnesium carbonate, dolomite, calcium sulfate, barium sulfate, calcium hydroxide, magnesium hydroxide, aluminum hydroxide, glass fiber, milled fiber, glass powder, ceramic beads, boron nitride, silicon carbide, graphite, and various clay minerals, such as halloysite and vermiculite.

The content of the other component in the thermoplastic resin composition can be, for example, set to 50% by mass or less, and it is preferably 20% by mass or less, more preferably 10% by mass or less, and still more preferably 5% by mass or less.

An ethylene-based copolymer containing an elastomer or an ionomer occasionally lowers the heat resistance and the mechanical strength of molded articles or increases a burr, and therefore, it is preferred that such an ethylene-based copolymer is not contained.

The total content of the thermoplastic resin (A) and the inorganic filler (B) in the thermoplastic resin composition is, for example, preferably 50% by mass or more, more preferably 80% by mass or more, still more preferably 90% by mass or more, and yet still more preferably 95% by mass or more.

(Metal Component)

The metal constituting the metal component which is used in the present invention is not particularly limited so long as it is able to undergo insert molding. Examples thereof include aluminum, copper, iron, tin, nickel, zinc, and an alloy, such as an aluminum alloy and stainless steel. The surface of such a metal may be plated with aluminum, tin, nickel, gold, silver, or the like.

(Waterproof Component)

It is possible to produce a waterproof component by, for example, a method of subjecting a thermoplastic resin composition and a metal component to insert molding, wherein

the thermoplastic resin composition contains a thermoplastic resin (A) and an inorganic filler (B);
the inorganic filler (B) is at least either one of a spherical inorganic filler (B1) and a tabular inorganic filler (B2);
the spherical inorganic filler (B1) has an average particle diameter of 2 μm or more and 200 μm or less;
the tabular inorganic filler (B2) has an average particle diameter of 2 μm or more and 200 μm or less and has an average aspect ratio of 10 or more and 200 or less,
the thermoplastic resin composition being obtained through melt kneading of the inorganic filler (B) in the content of 8 to 130 parts by mass based on 100 parts by mass of the thermoplastic resin (A).

On performing the insert molding, an arbitrary method known as the insert molding method, for example, an injection insert molding method and a compression insert molding method, can be adopted.

After the insert molding, processing by an ultrasonic welding method, a laser welding method, a vibration welding method, a thermal welding method, a hot melt method, or the like may be further performed, as the need arises.

In component mounting for mounting an electronic component on a printed circuit board, an insert mounting process of performing welding through dipping in a molten solder tank (dipping tank) has hitherto been applied. Meanwhile, according to surface mounting, the usage of which is recently expanding, a solder paste is printed on a printed circuit board, and an electronic component is then mounted thereon, followed by heating in a reflow furnace generally at about 260°C to melt the solder, thereby joining the printed circuit substrate and the electronic component to each other. According to the surface mounting, downsizing or improvement in productivity of the printed circuit board can be achieved; however, in the mounted component, in the reflow process and the sequent cooling process, a stress is generated according to a difference in the expansion and shrinkage characteristics between the metal component and the resin or resin composition, and a minute gap is liable to be generated between the metal component and the resin or resin composition, so that it is difficult to maintain the waterproofness. According to the waterproof component of the present invention, in view of the fact that even after the heating process, such as the reflow process, deformation is hardly caused, and therefore, it is preferred to use the waterproof component of the present invention for an application to be applied in a surface mounting process in which such a reflow process is adopted. The heating process, such as the reflow process, may be applied several times, as the need arises.

Since the waterproof component of the present invention is excellent in waterproofness, it is useful as an external connection terminal, such as FPC connector, BtoB connector, card connector, SMT connector (e.g., coaxial connector), and memory card connector; an SMT relay; an SMT bobbin; a socket, such as memory socket and CPU socket; a switch, such as a command switch and an SMT switch; a sensor, such as rotation sensor and acceleration sensor; and so on. Above all, the waterproof component of the present invention is useful as a switch or an external connection terminal of an electronic device, and especially useful as a switch.

In the case of using the waterproof component of the present invention as a switch, when the external dimensions of an insert molded body formed from the thermoplastic resin composition and the metal component are defined as (width) × (depth) × (thickness), the width is preferably 15 mm or less, more preferably 10 mm or less, and still more preferably 5 mm or less; the depth is preferably 50 mm or less, more preferably 25 mm or less, and still more preferably 5 mm or less; and the thickness is preferably 50 mm or less, more preferably 15 mm or less, and still more preferably 3 mm or less. The depth of the external dimensions is regulated to be longer than the width.

When the waterproof component of the present invention is used especially as a switch or an external connection terminal, the electronic device can be effectively made waterproof.

Examples of the electronic device provided with the waterproof component of the present invention include portable electronic devices, such as a digital camera and a smartphone, but it should be construed that the present invention is not limited thereto.

That is, the present invention is also able to provide a waterproofing method using an insert molded body composed of the aforementioned thermoplastic resin composition and the metal component and use for waterproofing an insert molded body.

Examples

The present invention is hereunder described in more detail by reference to Examples, but it should be construed that the present invention is by no means limited by these Examples.

A melting point and a glass transition temperature of the thermoplastic resin (A) used in each of the Examples and Comparative Examples were measured according to the following methods.

(Melting Point and Glass Transition Temperature of Thermoplastic Resin (A))

The melting point of each of polyamides (PA9T as mentioned later) used as the thermoplastic resin (A) was determined when a peak temperature of a melting peak appearing at the time of raising the temperature from 30°C to 360°C at a rate of 10°C/min in a nitrogen atmosphere by using a differential scanning calorimeter (DSC7020), manufactured by Hitachi High-Tech Science Corporation was defined as a melting point (°C). In the case where plural melting peaks appeared, a peak temperature of melting peak on the highest temperature side was defined as the melting point.

Thereafter, the sample was held at a temperature of 30°C higher than the melting point for 10 minutes and completely molten, and then cooled to 40°C at a rate of 10°C/min, followed by holding at 40°C for 10 minutes. Again, when the temperature was raised to a temperature of 30°C higher than the melting point at a rate of 10°C/min, an intermediate point at which the DSC curve changed stepwise was defined as the glass transition temperature.

[Examples 1 to 6 and Comparative Examples 1 to 3]

Into a twin-screw extruder, manufactured by PLABOR Research Laboratory of Plastics Technology Co., Ltd. (screw diameter: 32 mmφ, L/D = 30, rotation rate: 150 rpm, discharge rate: 10 kg/h), the thermoplastic resin (A) shown in Table 1 and other components were fed from a hopper of an uppermost stream part, and the inorganic filler (B) shown in Table 1 was further fed from a side feeder, followed by melt kneading. The melt-kneaded thermoplastic resin composition was extruded in a strand form, cooled, and then cut, to obtain pellets of the thermoplastic resin composition. In Table 1, all of the amounts of the thermoplastic resin (A), the inorganic filler (B), and the other components mean "parts by mass".

Using those pellets, the evaluation as a molded article was performed by the following method.

[Red Ink Test (Waterproofing Test)]

Using an injection molding machine TR40EH, manufactured by Sodick Co., Ltd., the thermoplastic resin composition obtained in each of the Examples and Comparative Examples was subjected to injection molding in a box shape (external dimensions: 2.8 mm in width, 3.0 mm in depth, and 1.3 mm in thickness) on an LED lead frame which had been subjected to nickel plating on a copper matrix, at a maximum temperature of 320°C and a die temperature of 140°C and at an injection speed of 100 to 200 mm/s.

Using a sample prepared by thermally treating twice the above-obtained tabular molded article with a reflow apparatus having a maximum attained temperature of 260°C under the following reflow condition, the following red ink test was carried out.

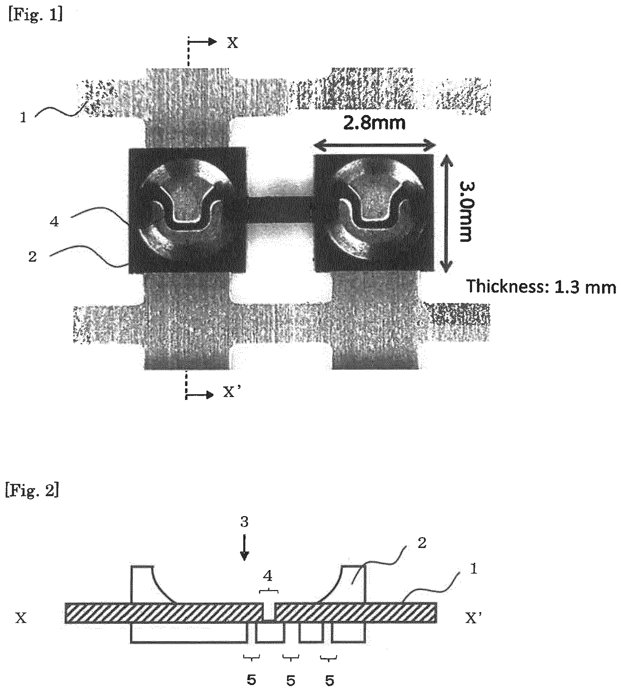

Here, Fig. 1 is a photograph of the aforementioned sample. In addition, Fig. 2 is a schematic view illustrating an X-X' line cross-sectional view of the sample photograph of Fig. 1. As illustrated in Fig. 2, the aforementioned sample is an insert molded body composed of an LED lead frame 1 and a box shape 2 formed of a thermoplastic resin composition and has a depression 3 for ink dripping for the purpose of using for the red ink test. The foregoing depression portion has an unconnected portion 4 in which not only a part of the LED lead frame is exposed, but also a part of the LED lead frame lacks. In addition, though the box shape 2 has gaps 5 on the rear side (surface not having the depression 3), the unconnected portion 4 does not superimpose the gaps 5. In the photograph of Fig. 1, a ring-shaped portion is shown in the box shape 2; however, this is seen in the ring shape while a curved part of the thermoplastic resin composition reflects light.

(Reflow Condition):

The sample was subjected to temperature rise from 25°C to 150°C over 60 seconds, subsequently subjected to temperature rise to 180°C over 90 seconds, and further subjected to temperature rise to 260°C over 60 seconds. Thereafter, the sample was held at 260°C for 20 seconds and then cooled from 260°C to 100°C over 30 seconds, and after reaching 100°C, the resulting sample was enclosed with air and then naturally cooled to 23°C.

(Red Ink Test):

A red ink (Stamp Ink Red, manufactured by LION OFFICE PRODUCTS CORP.) was dripped in the depression portion 3 of the box shape 2 formed of the thermoplastic resin composition, and after elapsing 5 minutes, the ink was removed. Then, the box shape (thermoplastic resin composition) was removed from the LED lead frame to confirm whether or not the ink attached to the rear side of the LED lead frame that is opposite to the ink dripping side.

The case where the ink did not attach to the rear side of the LED lead frame was judged to be "not leaked". In addition, the case where the ink attached to the rear side of the LED lead frame was judged to be "leaked".

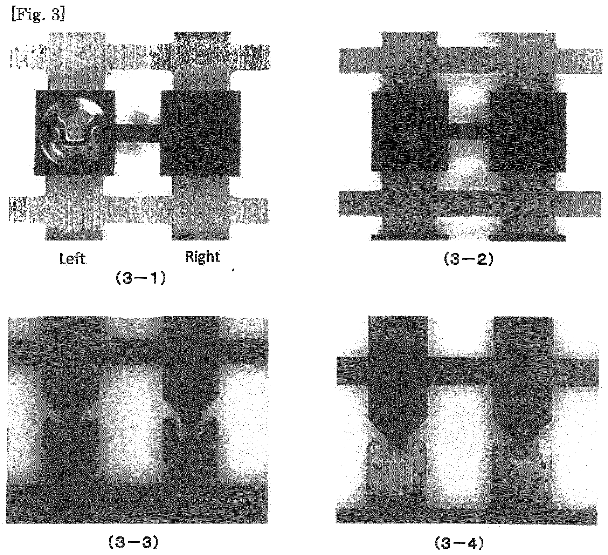

(3-1) of Fig. 3 is a photograph of the sample surface, and the left is before dripping of the red ink, whereas the right is after dripping of the red ink. (3-2) of Fig. 3 is a photograph of the rear surface of the sample before dripping of the red ink. (3-3) of Fig. 3 is a photograph showing the results of Example 1 which was judged to be "not leaked" in the red ink test. (3-4) of Fig. 3 is a photograph showing the results of Comparative Example 1 which was judged to be "leaked".

Table 1

| | | Example | | | | | | Comparative Example | | |
|---|---|---|---|---|---|---|---|---|---|---|
| | | 1 | 2 | 3 | 4 | 5 | 6 | 1 | 2 | 3 |
| Thermoplastic resin (A) | PA9T | 100 | 100 | 100 | 100 | 100 | 100 | 100 | 100 | 100 |
| Inorganic filler (B) | Glass beads | | | 53.8 | 100 | 54.5 | | | | |
| | Mica | 53.8 | 100 | | | | 54.5 | | | |
| Other components | Glass fiber | | | | | | | 42.9 | 54.5 | 100 |
| | Flame retardant | | | | | 27.3 | 27.3 | | 27.3 | 22.2 |
| | Antioxidant-1 | 0.2 | 0.2 | 0.2 | 0.2 | 0.2 | 0.2 | 0.1 | 0.2 | 0.2 |
| | Antioxidant-2 | 0.2 | 0.2 | 0.2 | 0.2 | 0.2 | 0.2 | 0.1 | 0.2 | 0.2 |
| | Nucleating agent | 0.3 | 0.4 | 0.3 | 0.4 | 0.4 | 0.4 | 0.3 | 0.4 | 0.4 |
| | Release agent | 0.5 | 0.6 | 0.5 | 0.6 | 0.5 | 0.5 | 0.4 | 0.5 | 0.7 |
| Red ink test | | Not leaked | Not leaked | Not leaked | Not leaked | Not leaked | Not leaked | Leaked | Leaked | Leaked |

The respective components shown in Table 1 are as follows.

[Thermoplastic Resin (A)]

• PA9T:

"GENESTAR GC31110", manufactured by Kuraray Co., Ltd., PA9T (polyamide in which the dicarboxylic acid unit is a terephthalic acid unit, and the diamine unit is a 1,9-nonanediamine unit and a 2-methyl-1,8-octanediamine unit (molar ratio: 85/15), melting point: 305°C, glass transition temperature: 125°C

[Spherical Inorganic Filler (B1)]

• Glass beads:

"EGB731-PN", manufactured by Potters-Ballotini Co., Ltd., average particle diameter: 20 $\mu$m

[Tabular Inorganic Filler (B1)]

• Mica:

"S-325", manufactured by Repco Inc., average particle diameter: 27 $\mu$m, average aspect ratio: 30

[Other Components]

• Glass fiber:

"CS3J256S", manufactured by Nitto Boseki Co., Ltd., average fiber diameter: 11 $\mu$m, average fiber length: 3 mm

• Flame retardant:

"Exolit OP1230", manufactured by Clariant Chemicals Ltd.

• Antioxidant-1:

"Irganox 1098", manufactured by BASF Japan Ltd.

• Antioxidant-2:

"Irgafos 168", manufactured by BASF Japan Ltd.

• Nucleating agent:

Carbon Black "#980B", manufactured by Mitsubishi Chemical Corporation

• Release agent:

High-density polyethylene "HI WAX 200P", manufactured by Mitsui Chemicals, Inc.

In Example 1, as shown in (3-3) of Fig. 3, the red ink did not attach to the rear surface of the LED lead frame after removing the resin composition. It is noted that in Example 1, even after the reflow process, a gap was not generated between the LED lead frame and the thermoplastic resin composition, and the insert molded body with excellent waterproofness was obtained. In addition, it is noted that in Examples 2 to 6, the same results as in Example 1 were obtained, and the insert molded bodies with excellent waterproofness were obtained.

On the other hand, in Comparative Example 1, as shown in (3-4) of Fig. 3, the red ink attached to the rear surface of the LED lead frame after removing the resin composition. That is, in Comparative Example 1, since the rod-shaped glass fiber was used in place of the inorganic filler (B), it may be considered that by going through the reflow process, a gap was generated between the LED lead frame and the thermoplastic resin composition, and the red ink came thereinto from the unconnected portion 4, to cause leakage of the red ink, resulting in inferior waterproofness. In addition, in Comparative Examples 2 and 3, similar to Comparative Example 1, the red ink attached to the rear surface of the LED lead frame, resulting in inferior waterproofness.

In consequence, it is noted from comparison between the Examples and the Comparative Examples, the waterproof component of the present invention is excellent with respect to the waterproofness after the reflow process.

Industrial Applicability

In accordance with the present invention, it is possible to provide a waterproof component that is an insert molded body, which has sufficient waterproofness even after a heating process, such as a reflow process. The waterproof component is useful especially as an external connection terminal, etc. of an electronic device.

Reference Signs List

1:      LED lead frame (metal component)
2:      Box shape formed of thermoplastic resin composition
3:      Depression for ink dripping
4:      Unconnected portion of LED lead frame
5:      Gap

**Claims**

1. A waterproof component that is an insert molded body formed from a thermoplastic resin composition and a metal component, wherein

    the thermoplastic resin composition comprises a thermoplastic resin (A) and an inorganic filler (B);
    the content of the inorganic filler (B) is 8 to 130 parts by mass based on 100 parts by mass of the thermoplastic resin (A);
    the inorganic filler (B) is at least either one of a spherical inorganic filler (B1) and a tabular inorganic filler (B2);
    the spherical inorganic filler (B1) has an average particle diameter of 2 $\mu$m or more and 200 $\mu$m or less; and
    the tabular inorganic filler (B2) has an average particle diameter of 2 $\mu$m or more and 200 $\mu$m or less and has an average aspect ratio of 10 or more and 200 or less.

2. The waterproof component according to claim 1, wherein the thermoplastic resin (A) has a melting point of 280°C or higher.

3. The waterproof component according to claim 1 or 2, wherein the thermoplastic resin (A) is at least one selected from the group consisting of a polyamide, a liquid crystal polymer, a polyphenylene sulfide, and a styrenic polymer having a mainly syndiotactic structure.

4. The waterproof component according to any of claims 1 to 3, wherein the thermoplastic resin (A) is a polyamide in which 50 to 100 mol% of a diamine unit thereof is an aliphatic diamine unit having 4 to 18 carbon atoms.

5. The waterproof component according to any of claims 1 to 4, wherein the inorganic filler (B) is at least one selected from the group consisting of glass beads, spherical silica, mica, glass flake, and kaolin.

6. The waterproof component according to claim 5, wherein the inorganic filler (B) is at least one selected from the group consisting of glass beads and mica.

7. The waterproof component according to any of claims 1 to 6, which is used for an application to be applied in a surface mounting process.

8. The waterproof component according to any of claims 1 to 7, which is an external connection terminal.

9. The waterproof component according to any of claims 1 to 8, which is a switch.

10. An electronic device provided with the waterproof component according to any of claims 1 to 9.

**11.** The electronic device according to claim 10, which is a portable electronic device.

**12.** A waterproofing method using an insert molded body formed from a thermoplastic resin composition and a metal component, the method comprising using a thermoplastic resin composition, wherein

the thermoplastic resin composition contains a thermoplastic resin (A) and an inorganic filler (B);
the content of the inorganic filler (B) is 8 to 130 parts by mass based on 100 parts by mass of the thermoplastic resin (A);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less.

**13.** Use for waterproofing an insert molded body formed from a thermoplastic resin composition and a metal component, wherein

the thermoplastic resin composition contains a thermoplastic resin (A) and an inorganic filler (B);
the content of the inorganic filler (B) is 8 to 130 parts by mass based on 100 parts by mass of the thermoplastic resin (A);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less.

**14.** A method for waterproofing an electronic device, comprising using the waterproof component according to any of claims 1 to 7 as an external connection terminal.

**15.** A method for waterproofing an electronic device, comprising using the waterproof component according to any of claims 1 to 7 as a switch.

**16.** A method for producing a waterproof component, comprising subjecting a thermoplastic resin composition and a metal component to insert molding, wherein

the thermoplastic resin composition contains a thermoplastic resin (A) and an inorganic filler (B);
the inorganic filler (B) is at least either one of a spherical inorganic filler (B1) and a tabular inorganic filler (B2);
the spherical inorganic filler (B1) has an average particle diameter of 2 $\mu$m or more and 200 $\mu$m or less; and
the tabular inorganic filler (B2) has an average particle diameter of 2 $\mu$m or more and 200 $\mu$m or less and has an average aspect ratio of 10 or more and 200 or less,
the thermoplastic resin composition being obtained through melt kneading of the inorganic filler (B) in the content of 8 to 130 parts by mass based on 100 parts by mass of the thermoplastic resin (A).

[Fig. 1]

[Fig. 2]

[Fig. 3]

Left    Right
(3-1)

(3-2)

(3-3)

(3-4)

## INTERNATIONAL SEARCH REPORT

| International application No. |
|---|
| PCT/JP2020/007174 |

**A. CLASSIFICATION OF SUBJECT MATTER**
C08L 25/06(2006.01)i; C08L 77/00(2006.01)i; C08L 81/02(2006.01)i; C08L 101/00(2006.01)i; C08K 3/013(2018.01)i; C08K 3/34(2006.01)i; C08K 3/36(2006.01)i; C08K 3/40(2006.01)i
FI:      C08L101/00; C08L77/00; C08L81/02; C08L25/06; C08K3/40; C08K3/36; C08K3/34; C08K3/013
According to International Patent Classification (IPC) or to both national classification and IPC

**B. FIELDS SEARCHED**

Minimum documentation searched (classification system followed by classification symbols)
C08L25/06; C08L77/00; C08L81/02; C08L101/00; C08K3/013; C08K3/34; C08K3/36; C08K3/40

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-301737 A (IDEMITSU PETROCHEMICAL CO., LTD.) 15.10.2002 (2002-10-15) claims, paragraph [0022], examples | 1–3, 5–16 |
| Y | claims, paragraph [0022], examples | 8, 9, 11, 14, 15 |
| X | JP 2002-326252 A (IDEMITSU PETROCHEMICAL CO., LTD.) 12.11.2002 (2002-11-12) claims, paragraph [0023], examples | 1–3, 5–16 |
| Y | claims, paragraph [0023], examples | 8, 9, 11, 14, 15 |
| X | JP 4-123461 A (POLYPLASTICS CO., LTD.) 23.04.1992 (1992-04-23) claims, paragraph [0018], examples | 1–3, 5–7, 10, 12, 13, 16 |
| Y | claims, paragraph [0018], examples | 8, 9, 11, 14, 15 |

☒  Further documents are listed in the continuation of Box C.      ☒  See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 23 April 2020 (23.04.2020) | 12 May 2020 (12.05.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

Form PCT/ISA/210 (continuation of second sheet) (January 2015)

**INTERNATIONAL SEARCH REPORT**

| International application No. |
| --- |
| PCT/JP2020/007174 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 4-211916 A (POLYPLASTICS CO., LTD.) 03.08.1992 (1992-08-03) claims, paragraph [0016], examples | 1-3, 5-7, 10, 12, 13, 16 |
| Y | claims, paragraph [0016], examples | 8, 9, 11, 14, 15 |
| X | WO 2017/110646 A1 (POLYPLASTICS CO., LTD.) 29.06.2017 (2017-06-29) claims, paragraphs [0002], [0065], examples | 1-3, 5-7, 10, 12, 13, 16 |
| Y | claims, paragraphs [0002], [0065], examples | 8, 9, 11, 14, 15 |
| X | JP 2016-124885 A (POLYPLASTICS CO., LTD.) 11.07.2016 (2016-07-11) claims, paragraph [0072], examples | 1-3, 5-7, 10, 12, 13, 16 |
| Y | claims, paragraph [0072], examples | 8, 9, 11, 14, 15 |
| X | WO 2016/103470 A1 (POLYPLASTICS CO., LTD.) 30.06.2016 (2016-06-30) claims, paragraph [0087], examples | 1-3, 5-7, 10, 12, 13, 16 |
| Y | claims, paragraph [0087], examples | 8, 9, 11, 14, 15 |

INTERNATIONAL SEARCH REPORT

Information on patent family members

International application No.

PCT/JP2020/007174

| Patent Documents referred in the Report | Publication Date | Patent Family | Publication Date |
|---|---|---|---|
| JP 2002-301737 A | 15 Oct. 2002 | WO 2020/083393 A1 | |
| JP 2002-326252 A | 12 Nov. 2002 | WO 2002/090083 A1 | |
| JP 4-123461 A | 23 Apr. 1992 | US 5160786 A claims, examples EP 435648 A2 DE 69025303 C ES 2083440 T DK 435648 T AT 134071 T CA 2032962 A GR 3019723 T KR 10-1991-0012086 A CA 2032962 A1 | |
| JP 4-211916 A | 03 Aug. 1992 | (Family: none) | |
| WO 2017/110646 A1 | 29 Jun. 2017 | KR 10-201-0081151 A CN 108431138 A TW 201739843 A | |
| JP 2016-124885 A | 11 Jul. 2016 | (Family: none) | |
| WO 2016/103470 A1 | 30 Jun. 2016 | EP 3229240 A1 claims, examples KR 10-2017-0087505 A CN 107109058 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002033155 A
- JP 2014141630 A
- JP 2003321606 A
- JP 2002105333 A
- JP 7228690 A

**Non-patent literature cited in the description**

- REFERENCE MANUAL FOR THE COULTER MULTISIZER. Coulter Electronics Limited, 1987